# EUROPEAN PATENT SPECIFICATION

(11) **EP 1 808 360 B1**
(45) Date of publication and mention of the grant of the patent: **08.07.2009**
(21) Application number: 07000647.3
(22) Date of filing: 13.01.2007
(51) Int. Cl.: B62D 5/04

(54) **Electric power steering apparatus**
Elektrische Servolenkung
Direction assistée électrique

(30) Priority: 16.01.2006 JP 2006007869
(43) Date of publication of application: 18.07.2007
(73) Proprietor: JTEKT CORPORATION, Chuo-ku Osaka-shi Osaka 542-8502 (JP)
(72) Inventor: Nishiyama, Akihiro, Osaka-shi Osaka 542-8502 (JP)
(74) Representative: Steil, Christian

(56) References cited:
- EP-A1- 1 184 259
- US-A- 5 528 497
- US-A1- 2004 226 770

## Description

### BACKGROUND OF THE INVENTION

The present invention relates to an electric power steering apparatus configured to transmit a driving force produced by an electric motor to a steering mechanism as a steering assist force, as defined in the preamble of claim 1 and known from US-A-5,528,497.

Electric power steering apparatuses have been conventionally used. Such electric power steering apparatus is configured to perform steering assist by mechanically transmitting a driving force produced by an electric motor to a steering mechanism by a gear mechanism (a reduction mechanism) or a direct drive system.

In such electric power steering apparatuses, assist characteristics for determining the relationship between a steering torque applied to a steering wheel and an assist torque target value given to the steering mechanism from the electric motor have been previously determined, and are stored in a memory as an assist map. The assist torque target value corresponding to the steering torque is read out of the assist map, and the electric motor is driven and controlled on the basis of the read assist torque target value.

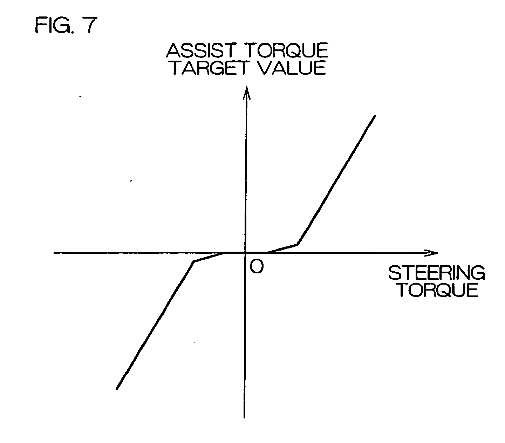

The assist characteristics are determined such that the larger the steering torque is, the larger the assist torque target value becomes, as shown in FIG. 7. A positive value is assigned to the steering torque with respect to a rightward steering direction, while a negative value is assigned to the steering torque with respect to a leftward steering direction, for example. The assist characteristics are determined such that a positive value of the assist torque target value corresponds to the steering torque taking a positive value, and a negative value of the assist torque target value corresponds to the steering torque taking a negative value.

When the assist torque target value is a positive value, a steering assist force to steer a steerable vehicle wheel rightward is exerted on the steering mechanism. Conversely, when the assist torque target value is a negative value, a steering assist force to steer a steerable vehicle wheel leftward is exerted on the steering mechanism. When the steering torque takes a value in a dead zone in the vicinity of zero, the assist torque target value is made zero.

In such electric power steering apparatuses to which such assist characteristics are applied, when the return stroke steering for rotating a steering wheel toward a steering angle midpoint is done, a steering feeling (a so-called spring feeling) such that the steering wheel is returned to the steering angle midpoint more strongly than a driver intends is produced. That is, when the return stroke steering is done, a steering torque is reduced and correspondingly, an assist force is reduced. Accordingly, the steerable vehicle wheel is returned to the steering angle midpoint strongly by an inverted input from the wheel.

This problem can be solved by increasing the slope of an assist characteristics curve such that a larger assist torque target value is set with respect to the steering torque. In this case, however, a responsive feeling at the time of forward stroke steering is degraded.

In United States Patent Application Publication Number US 2004/0226770 A1, an electric power steering apparatus is proposed, in which the reference assist characteristics are corrected on the basis of the steering speed, and a steering assist is performed in accordance with the obtained corrected assist characteristics. In this conventional art, the corrected assist characteristics are obtained by shifting the reference assist characteristics along the axis of coordinates of a steering torque in accordance with the steering speed at the time of steering hold-on and the return stroke steering operation while the steering assist is performed in accordance with the reference assist characteristics at the time of forward stroke steering. This enables to set different assist characteristics separately at the time of forward stroke steering and at the times of the steering hold-on and the return stroke steering operation. Specifically, a sufficient responsive feeling can be obtained at the time of forward stroke steering, and a sufficient steering assist force is transmitted to a steering mechanism at the times of hold-on steering and return stroke steering, thereby making it possible to cancel an undesirable steering feeling (spring feeling) such that a steering wheel is returned to a neutral position more strongly than a driver intends.

The inverted input (counter force) from the road surface is a value determined by a behavior of the motor vehicle, while the steering speed is not an amount that directly relates to the behavior of the motor vehicle, although is an amount somehow relates to the behavior of the motor vehicle. Consequently, the aforementioned conventional art, in which the shifting amount is set on the basis of the steering speed, may cause the driver an uncomfortable steering feeling depending on the situation.

In relation to the steering speed, a yaw rate, which expresses a behavior of a motor vehicle, is slow in response. In a conventional art shown in US2004/0226770 A1, the shifting amount which is fixed in accordance with the steering speed cannot correspond accurately to the behavior of the motor vehicle. That is to say, immediately after the driver stops operating the steering wheel at the time of steering operation, (immediately after the steering speed becomes zero), the yaw moment of the motor vehicle changes slowly and large steering effort on the steering wheel is required accordingly. In the conventional art, however, there is a case that the responsive feeling may be lost at the time of the forward stroke immediately after the steering speed becomes zero because the assist amount increases.

### SUMMARY OF THE INVENTION

It is an object of the present invention to provide an electric power steering apparatus which can further improve the steering feeling.

An electric power steering apparatus according to the present invention, as defined in claim 1, is so configured as to transmit a driving force from an electric motor to perform steering assist. The apparatus comprises an operation amount detecting unit for detecting an operation amount of an operation member for steering a motor vehicle; a reference assist characteristics setting unit for setting reference assist characteristics which are reference characteristics of a motor driving target value corresponding to the operation amount detected by the operation amount detecting unit; a motor driving target value setting unit for setting a motor driving target value corresponding to the operation amount detected by the operation amount detecting unit in accordance with corrected assist characteristics obtained by shifting the reference assist characteristics set by the reference assist characteristics setting unit along an axis of coordinates of the operation amount; a yaw rate detecting unit for detecting or estimating a yaw rate of the motor vehicle; and a shifting amount setting unit for setting a shifting amount of the corrected assist characteristics with respect to the reference assist characteristics corresponding to the yaw rate detected or estimated by the yaw rate detecting unit.

According to the present invention, the corrected assist characteristics obtained by correcting the reference assist characteristics set by the reference assist characteristics setting unit are applied to the operation amount detected by the operation amount detecting unit. That is, the motor driving target value is set in accordance with the corrected assist characteristics.

The shifting amount of the corrected assist characteristics with respect to the reference assist characteristics is set in accordance with the yaw rate detected or estimated by the yaw rate detecting unit. The yaw rate is an amount that directly expresses the turning behavior of the motor vehicle, that also directly relates to a lateral acceleration produced on the motor vehicle at the time of the turning operation, and that in turn directly relates to a driver's steering effort. Therefore, with the configuration of the present invention, in which the shifting amount is set in accordance with the yaw rate, an appropriate shifting amount in accordance with the turning behavior of the motor vehicle can be set. This can achieve a steering assist without any excess and deficiency, and as a result, an uncomfortable steering feeling can be reduced and the steering feeling can be improved.

It is preferred that the shifting amount setting unit sets, when forward stroke steering for operating the operation member in a direction away from a steering angle midpoint is done, a shifting amount of the corrected assist characteristics with respect to the reference assist characteristics to zero, while setting, when return stroke steering for operating the operation member toward the steering angle midpoint is done, the shifting amount of the corrected assist characteristics with respect to the reference assist characteristics to a value at which corrected assist characteristics is obtained in which an absolute value of the motor driving target value with respect to the operation amount detected by the operation amount detecting unit is increased.

The reference assist characteristics are corrected by shifting the reference assist characteristics along the axis of coordinates of the operation amount. The shifting amount is determined such that the shifting amount is made zero at the time of forward stroke steering (at the time of steering in the direction away from the steering angle midpoint, and in general, when the directions of the yaw rate and the steering torque coincide with each other), and that the shifting amount is made a value corresponding to the corrected assist characteristics in which the absolute value of the motor driving target value is made larger than that in the case of the reference assist characteristics at the time of return stroke steering (at the time of steering in the direction toward the steering angle midpoint, and in general, when the directions of the yaw rate and the steering torque do not coincide with each other).

For example, it is assumed that a steering torque detected by a steering torque detecting unit which is an example of the operation amount detecting unit takes a positive value with respect to a rightward steering direction, while taking a negative value with respect to a leftward steering direction. In the reference assist characteristics, it is assumed that a positive value of the motor driving target value is assigned to the steering torque value taking the positive value, while a negative value of the motor driving target value is assigned to the steering torque value taking the negative value. Further, the yaw rate takes a positive value with respect to the rightward steering direction, while taking a negative value with respect to the leftward steering direction.

In this case, in a case where the steering torque is not less than zero, for example, the shifting amount may be made zero when the yaw rate takes a positive value of not less than a first predetermined value (at the time of forward stroke steering), while being determined depending on the yaw rate when the yaw rate takes a value of less than the first predetermined value. At this time, the reference assist characteristics may not be shifted in the positive direction along the axis of coordinates of the steering torque, but may be exclusively shifted in the negative direction along the axis of coordinates of the steering torque. That is, the shifting amount may be determined such that its value in a case where the yaw rate takes the first predetermined value is zero and such that it decreases monotonously (for example, in a stepped manner or linearly), as the yaw rate decreases, to a negative lower-limit value with respect to the yaw rate which is less than the first predetermined value. In the reference assist characteristics, therefore, a portion in a range of the steering torque taking the positive value is shifted toward the origin, so that the steering assist force increases, thereby making it possible to improve a spring feeling at the time of return stroke steering. The above-mentioned first predetermined value may be determined to be not less than zero. If the first predetermined value is set to a positive value, however, the steering assist force can be increased in a steering hold-on state where the yaw rate becomes substantially zero, thereby making it possible to reduce a steering burden on a driver in the steering hold-on state. Further, in a return stroke steering state where the yaw rate takes a negative value, the shifting amount may be variably set depending on the yaw rate, or may be fixed to the negative lower-limit value irrespective of the yaw rate.

On the other hand, in a case where the steering torque takes a negative value, the shifting amount may be made zero when the yaw rate takes a negative value of not more than a second predetermined value, while being determined depending on the yaw rate when the yaw rate takes a value exceeding the second predetermined value. At this time, the reference assist characteristics may not be shifted in the negative direction on the axis of coordinates of the steering torque, but may be exclusively shifted in the positive direction on the axis of coordinates of the steering torque. That is, the shifting amount may be determined such that its value in a case where the yaw rate takes the second predetermined value is zero and such that it increases monotonously (for example, in a stepped manner or linearly), as the yaw rate increases, to a positive upper-limit value with respect to the yaw rate exceeding the second predetermined value. In the reference assist characteristics, therefore, a portion in a range of the steering torque taking the negative value is shifted toward the origin, so that the steering assist force increases, thereby making it possible to improve a spring feeling at the time of return stroke steering. The above-mentioned second predetermined value may be determined to be not more than zero. If the second predetermined value is set to a negative value, the steering assist force can be increased in a steering hold-on state where the yaw rate becomes substantially zero, thereby making it possible to reduce a steering burden on a driver in the steering hold-on state. In a return stroke steering state where the yaw rate takes a positive value, the shifting amount may be variably set depending on the yaw rate, or may be fixed to a positive upper-limit value irrespective of the yaw rate.

The motor driving target value is set in accordance with the corrected assist characteristics thus obtained, so that different assist characteristics can be set at the time of forward stroke steering and at the time of return stroke steering. Consequently, a sufficient responsive feeling can be obtained at the time of forward stroke steering, and a sufficient steering assist force is transmitted to the steering mechanism at the time of return stroke steering, thereby making it possible to cancel such an undesirable steering feeling (spring feeling) that a steering wheel is returned to a neutral position more strongly than the driver intends.

The electric power steering apparatus may further comprise a vehicle speed detecting unit for detecting the vehicle speed of the motor vehicle equipped with the electric power steering apparatus, and a vehicle speed adaptive shifting amount setting unit for variably setting the shifting amount of the corrected assist characteristics with respect to the reference assist characteristics depending on the vehicle speed detected by the vehicle speed detecting unit.

In this configuration, the shifting amount of the reference assist characteristics can be variably set depending on the vehicle speed. Accordingly, this can be applied to a case where it is not so necessary to correct the assist characteristics, such as a steering operation at the time of a stop or at the time of low-speed traveling.

The electric power steering apparatus may further comprise a steering torque detecting unit for detecting the steering torque applied to the operation member (which may also serve as the above-mentioned operation amount detecting unit), and a steering torque adaptive shifting amount setting unit for variably setting the shifting amount of the corrected assist characteristics with respect to the reference assist characteristics depending on the steering torque detected by the steering torque detecting unit.

By this configuration, when the steering torque takes a small value in the vicinity of zero, for example, the shifting amount can be restrained or reduced to zero. Consequently, it is possible to restrict the correction of the assist characteristics in a very small steering torque range where no correction of the assist characteristics is required.

The foregoing and other objects, features, and advantages of the present invention will become more apparent from the following detailed description of the present invention when taken in conjunction with the accompanying drawings.

### BRIEF DESCRIPTION OF THE DRAWINGS

FIG. 1 is a block diagram showing the electrical configuration of an electric power steering apparatus according to an embodiment of the present invention.
FIG. 2 is a diagram for explaining reference assist characteristics and corrected assist characteristics obtained by shifting the reference assist characteristics along the axis of coordinates of a steering torque.
FIGS. 3 (a) and 3 (b) are diagrams showing the relationship of a reference shifting amount with respect to a yaw rate.
FIG. 4 is a diagram for explaining variable setting of a shifting amount with respect to a vehicle speed.
FIG. 5 is a diagram for explaining variable setting of a shifting amount with respect to a steering torque.
FIG. 6 is a flow chart for explaining processing related to driving control of an electric motor by a microcomputer.
FIG. 7 is a diagram showing an example of assist characteristics.

### DETAILED DESCRIPTION OF PREFERRED EMBODIMENTS

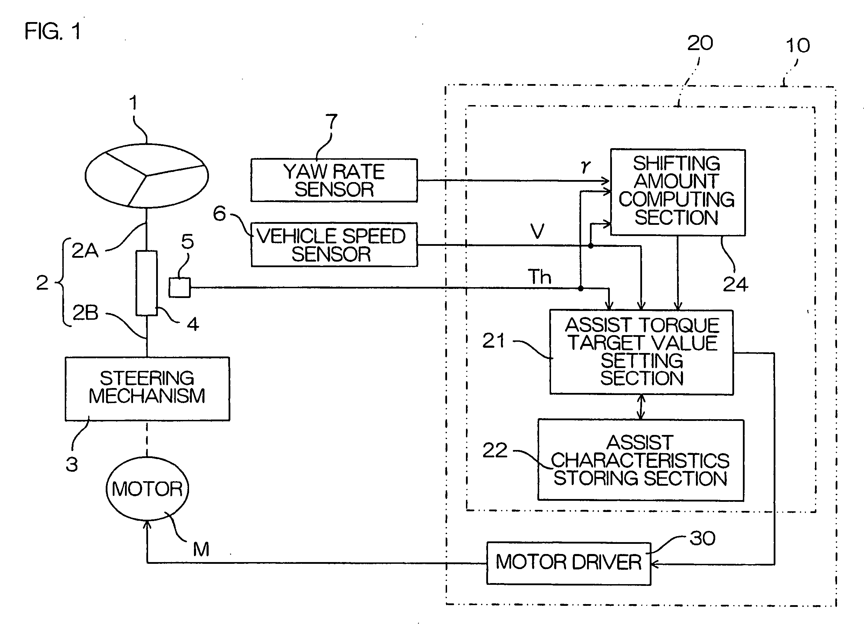

FIG. 1 is a block diagram showing the electrical configuration of an electric power steering apparatus according to an embodiment of the present invention. A steering torque applied to a steering wheel 1 serving as an operation member is mechanically transmitted to a steering mechanism 3 including a rack shaft through a steering shaft 2. A steering assist force is mechanically transmitted to the steering mechanism 3 from an electric motor M through a driving force transmitting mechanism such as a gear mechanism (a reduction mechanism) or through a direct drive system.

The steering shaft 2 is divided into an input shaft 2A coupled to the steering wheel 1 and an output shaft 2B coupled to the steering mechanism 3. The input shaft 2A and the output shaft 2B are connected to each other by a torsion bar 4. The torsion bar 4 causes distortion depending on the steering torque. The direction and the amount of the distortion are detected by a torque sensor 5 (operation amount detecting unit, steering torque detecting unit). An output signal of the torque sensor 5 is inputted to a controller 10 (ECU: Electronic Control Unit) .

An output signal of a vehicle speed sensor 6 (vehicle speed detecting unit) for detecting the traveling speed of a motor vehicle equipped with the electric power steering apparatus and an output signal of a yaw rate sensor 7 for detecting the yaw rate of the motor vehicle are further inputted to the controller 10.

The controller 10 determines an assist torque target value to be given to the steering mechanism 3 from the electric motor M depending on a steering torque Th detected by the torque sensor 5, a vehicle speed V detected by the vehicle speed sensor 6, and a yaw rate γ detected by the yaw rate sensor 7, in order to drive and control the electric motor M such that a steering assist force corresponding to the steering torque and the like is applied to the steering mechanism 3.

The controller 10 has a microcomputer 20 and a motor driver 30 for driving the electric motor M on the basis of a control signal from the microcomputer 20.

The microcomputer 20 includes an assist torque target value setting section 21 (motor driving target value setting unit) which is a functional processing section realized by executing program-based processing, and an assist characteristics storing section 22 (reference assist characteristics setting unit) composed of a storage area of a memory in the microcomputer 20. The assist characteristics storing section 22 stores a plurality of reference assist maps respectively corresponding to a plurality of reference assist characteristics previously respectively determined with respect to a plurality of vehicle speed areas. The reference assist characteristics are obtained by determining reference characteristics of an assist torque target value corresponding to a steering torque, and the reference value of the assist torque target value is stored in the assist characteristics storing section 22 in the form of an assist map (a table) in correspondence with the values of a plurality of steering torques.

The microcomputer 20 further includes a shifting amount computing section 24 (shifting amount setting unit) for computing a shifting amount in a case where the reference assist characteristics are shifted along the axis of coordinates of the steering torque to obtain virtual corrected assist characteristics. The shifting amount computing section 24 computes a shifting amount for obtaining virtual corrected assist characteristics obtained by shifting the reference assist characteristics along the axis of coordinates of the steering torque on the basis of the yaw rate γ detected by the yaw rate sensor 7, the vehicle speed V detected by the vehicle speed sensor 6, and the steering torque Th detected by the torque sensor 5.

The assist torque target value setting section 21 reads out an assist torque target value Ta corresponding to the corrected assist characteristics from the assist characteristics storing section 22 on the basis of the steering torque Th detected by the torque sensor 5, the vehicle speed V detected by the vehicle speed sensor 6, and a shifting amount ΔTh computed by the shifting amount computing section 24 (its sign represents a shifting direction, and its absolute value represents a shifting length). The motor driver 30 supplies a necessary and sufficient driving electric current to the electric motor M on the basis of the read assist torque target value Ta.

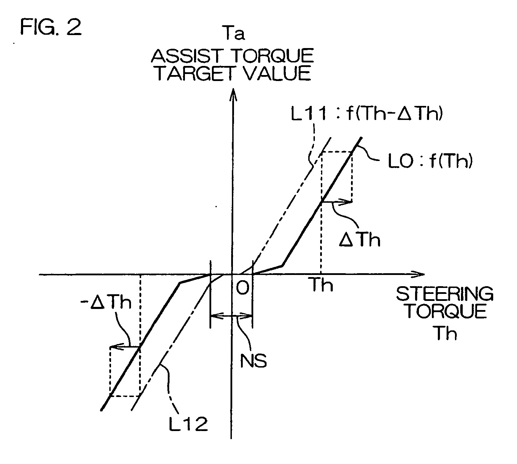

FIG. 2 is a diagram for explaining reference assist characteristics corresponding to the reference assist map stored in the assist characteristics storing section 22 and corrected assist characteristics obtained by shifting the reference assist characteristics along the axis of coordinates of the steering torque.

The steering torque Th detected by the torque sensor 5 takes a positive value when a torque for rightward steering is applied to the steering wheel 1, while taking a negative value when a torque for leftward steering is applied to the steering wheel 1. The reference assist characteristics are indicated by a curve L0 in FIG. 2. The reference assist characteristics are determined such that a positive value of the assist torque target value Ta corresponds to the steering torque Th taking the positive value, and that a negative value of the assist torque target value Ta corresponds to the steering torque Th taking the negative value. Although as described in the foregoing, the assist characteristics storing section 22 stores a plurality of reference assist maps corresponding to a plurality of vehicle speed areas, one reference assist characteristics applied in a certain vehicle speed area are illustrated in FIG. 2 for simplicity of illustration.

In the reference assist characteristics indicated by the curve L0, the assist torque target value Ta is set to zero irrespective of the value of the steering torque Th in the vicinity of Th=0. Such a range of the steering torque is a dead zone NS.

In the present embodiment, the assist torque target value Ta is set on the basis of virtual corrected assist characteristics (e.g., characteristics indicated by curves L11 and L12) obtained by shifting the reference assist characteristics along the axis of coordinates of the steering torque Th (in the positive direction or the negative direction) by the shifting amount ΔTh computed by the shifting amount computing section 24 on the basis of the yaw rate γ, the vehicle speed V, and the steering torque Th.

However, the reference assist characteristics are shifted only in the negative direction on the axis of coordinates of the steering torque Th in situations where the steering torque Th is not less than zero (see the curve L11), while being shifted only in the positive direction on the axis of coordinates of the steering torque Th in situations where the steering torque Th takes a negative value (see the curve L12), as described below.

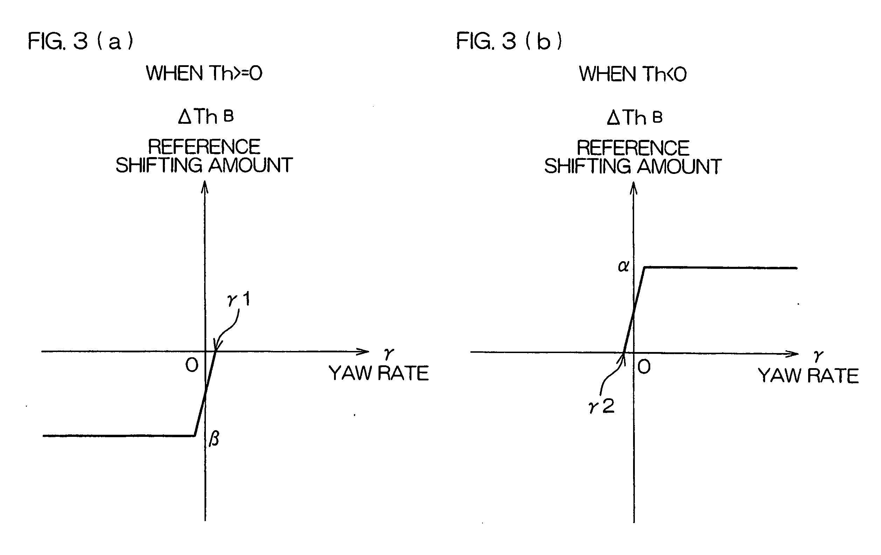

FIGS. 3 (a) and 3 (b) are diagrams for explaining the function of the shifting amount computing section 24, where the relationship of a reference shifting amount ΔTh_{B} with respect to the yaw rate γ. In this embodiment, the yaw rate γ takes a positive value with respect to the yaw rate γ in a rightward turning direction of the motor vehicle and takes a negative value with respect to the yaw rate γ in a leftward turning direction of the motor vehicle. The shifting amount computing section 24 multiples the reference shifting amount ΔTH_{B} determined in accordance with Fig. 3 by a vehicle speed gain Gᵥ and a torque gain G_{T}, described later, to find a shifting amount ΔTh (=G_{V}×G_{T}×ΔTh_{B}).

The shifting amount computing section 24 has a memory storing a table corresponding to a curve (a polygonal line in this example) of the characteristics shown in FIGS. 3 (a) and 3(b), for example. The shifting amount computing section 24 determines the reference shifting amount ΔTh_{B} in accordance with a table of characteristics shown in FIG. 3(a) when the steering torque Th satisfies Th>=0, while determining the reference shifting amount ΔTH_{B} in accordance with a table of characteristics shown in FIG. 3 (b) when the steering torque Th satisfies Th<0.

In the table of the characteristics shown in FIG. 3(a) applied when Th>=0, the reference shifting amount ΔTH_{B} which is zero or negative is set in a range where the yaw rate γ is not more than a first predetermined value γ1 (>0). More specifically, in a range where the yaw rate γ is not more the first predetermined value γ1, the reference shifting amount ΔTh_{B} is so set as to decrease monotonously (linearly in the example shown in FIG. 3(a)) using a lower-limit value β (where β<0) as a lower limit as the yaw rate γ decreases. Contrary to this, in a range where the yaw rate γ exceeds the first predetermined value γ1, the reference shifting amount ΔTh_{B} satisfies ΔTH_{B} =0 without depending on the yaw rate γ.

On the other hand, in the table of the characteristics shown in FIG. 3(b) applied when Th<0, the reference shifting amount ΔTh_{B} which is zero or positive is set in a range where the yaw rate γ is not less than a second predetermined value γ2 (where γ2<0. For example, |γ2|=γ1.) In the foregoing range, the reference shifting amount ΔTh_{B} which is zero or positive is set. More specifically, in a range where the yaw rate γ is not less than the second predetermined value γ2, the reference shifting amount ΔTh_{B} is so set as to increase monotonously (linearly in the example shown in FIG. 3(b)) using an upper-limit value α (where α>0. For example, α=|β|) as an upper limit as the yaw rate γ increases. Contrary to this, in a range where the yaw rate γ is less than the second predetermined value γ2, the reference shifting amount ΔTh_{B} satisfies ΔTh_{B} =0 without depending on the yaw rate γ.

At the time of forward stroke steering in which the direction of the steering torque Th and the direction of the yaw rate γ (turning direction of the motor vehicle) coincide with each other (at the time of steering in a direction away from a steering angle midpoint), the reference shifting amount ΔTH_{B} becomes zero. On the other hand, at the time of return stroke steering in which the direction of the steering torque Th and the direction of the yaw rate γ do not coincide with each other (at the time of steering in a direction toward the steering angle midpoint), the reference shifting amount ΔTh_{B} is determined such that the reference assist characteristics are shifted in a direction toward the origin along the axis of coordinates of the steering torque. Further, when the yaw rate γ takes a value in the vicinity of zero (γ2<γ<γ1) at the time of hold-on steering, the reference shifting amount ΔTh_{B} is determined such that the reference assist characteristics are shifted in the direction toward the origin along the axis of coordinates of the steering torque.

In such a manner, at the time of forward stroke steering, sufficient responsive feeling can be given to a driver. On the other hand, at the time of return stroke steering and at the time of hold-on steering, a spring feeling at the time of return stroke steering can be canceled by shifting the reference assist characteristics toward the origin, and a good steering feeling can be realized by reducing a steering burden at the time of hold-on steering.

Since the shifting amount is determined in accordance with the yaw rate γ, an appropriate steering assist corresponding to the behavior of the motor vehicle is made possible and accordingly the counter force of the motor vehicle which causes the spring feeling can be restrained at an appropriate timing and the steering feeling can be drastically improved.

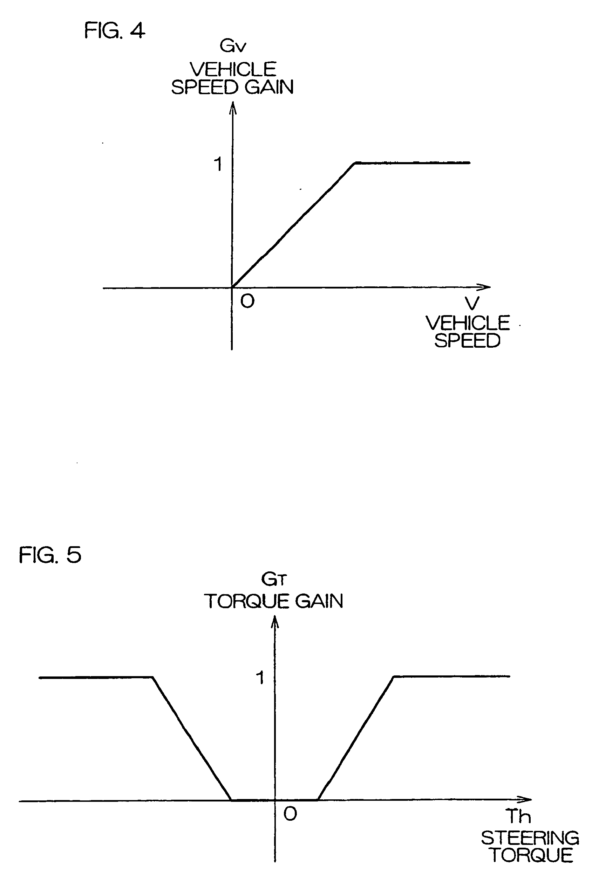

FIG. 4 is a diagram for explaining variable setting of a shifting amount ΔTh corresponding to the vehicle speed V, and FIG. 5 is a diagram for explaining variable setting of a shifting amount ΔTh corresponding to the steering torque Th. The shifting amount computing section 24 finds a reference shifting amount ΔTh_{B} in accordance with the characteristics shown in FIGS. 3 (a) and 3(b), and further multiples the reference shifting amount ΔTH_{B} by a vehicle speed gain Gv determined in accordance with characteristics shown in FIG. 4 and a torque gain G_{T} determined in accordance with characteristics shown in FIG. 5, to find a shifting amount ΔTh (=ΔTh_{B}×G_{V}×G_{T}). The assist torque target value setting section 21 retrieves the reference assist map stored in the assist characteristics storing section 22 using the shifting amount ΔTh, thereby reading out an assist torque target value Ta conforming to corrected assist characteristics which are virtually determined depending on the yaw rate γ, the vehicle speed V, and the steering torque Th.

The vehicle speed gain Gᵥ is so determined as to increase monotonously (linearly in this example) using a predetermined upper-limit value ("1" in the example shown in FIG. 4) as an upper limit as the vehicle speed V increases when the vehicle speed V is within a range from zero to a predetermined speed.

This can also cope with a case where the assist characteristics need not be so much corrected, such as a steering operation at the time of a stop or at the time of low-speed traveling.

On the other hand, the torque gain G_{T} uses a region in the vicinity of the steering torque Th=0 as a dead zone, and is so set as to increase monotonously (linearly in this example) (outside the dead zone) using a predetermined upper-limit value ("1" in this example) as an upper limit as the absolute value of the steering torque Th increases. Consequently, correction of assist characteristics is restricted in a range in the vicinity of the steering torque Th=0 where no correction of assist characteristics is required.

On the basis of the shifting amount ΔTh determined in the foregoing manner, the assist torque target value Ta is determined in accordance with virtual corrected assist characteristics obtained by shifting the reference assist characteristics by the shifting amount ΔTh along the axis of coordinates of the steering torque.

More specifically, when it is assumed that the reference assist characteristics are represented by Ta=f(Th) using a function f, a value obtained by subtracting the shifting amount ΔTh from the steering torque Th detected by the torque sensor 5 is used as a steering torque value Th* for assist map retrieval (that is, Th*=Th-ΔTh), and the reference assist map stored in the assist characteristics storing section 22 may be retrieved using the steering torque value Th* for retrieval. Consequently, the assist torque target value Ta (=f (Th*)) can be determined in accordance with the virtual corrected assist characteristics.

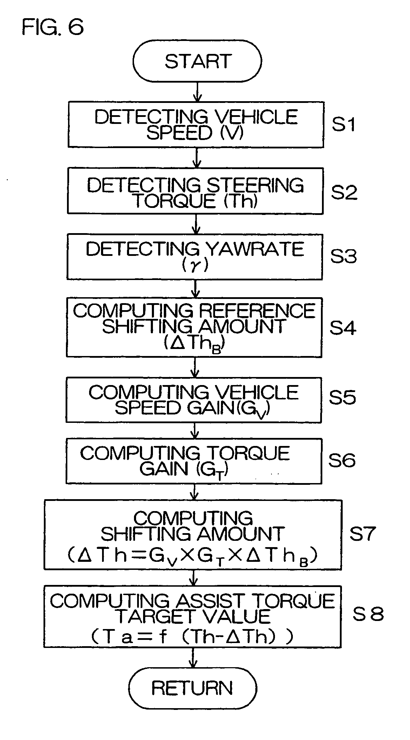

FIG. 6 is a flow chart for explaining the function repeatedly performed by the microcomputer 20. The microcomputer 20 reads the vehicle speed V detected by the vehicle speed sensor 6 and the steering torque Th detected by the torque sensor 5 (Steps S1 and S2). Further, an output signal of the yaw rate sensor 7 is read and the yaw rate γ is found (Step S3). The shifting amount computing section 24 reads out the reference shifting amount ΔTh_{B} corresponding to the found yaw rate γ on the basis of the yaw rate γ. (Step S4). Further, the shifting amount computing section 24 finds the vehicle speed gain Gᵥ on the basis of the vehicle speed V detected by the vehicle speed sensor 6 (Step S5. Vehicle speed adaptive shifting amount setting unit). Further, the shifting amount computing section 24 finds the torque gain G_{T} on the basis of the steering torque Th detected by the torque sensor 5 (Step S6. Steering torque adaptive shifting amount setting unit). The shifting amount ΔTh is computed by multiplying the reference shifting amount ΔTh_{B} by the vehicle speed gain Gᵥ and the torque gain G_{T} thus found (Step S7).

The found shifting amount ΔTh is given to the assist torque target value setting section 21. The assist torque target value setting section 21 finds the steering torque value Th* for retrieval as Th*←Th-ΔTh, and retrieves the reference assist map stored in the assist characteristics storing section 22 on the basis of the steering torque value Th* for retrieval (Step S8).

In such a manner, an assist torque target value Ta conforming to virtual corrected assist characteristics obtained by shifting reference assist characteristics along the axis of coordinates of the steering torque by the shifting amount ΔTh is read out from the assist characteristic storing section 22. The motor driver 30 is controlled on the basis of the read assist characteristic target value Ta, and the motor M produces a driving force corresponding thereto, to supply the produced driving force to the steering mechanism 3.

Although description has been made of the embodiment of the present invention, the present invention can be also embodied in another embodiment. Although in the above-mentioned embodiment, the vehicle speed V and the steering torque Th are considered with respect to the shifting amount ΔTh of the assist characteristics, variable setting of a shifting amount dependent on the vehicle speed V and the steering torque Th is not necessarily required. That is, the reference shifting amount ΔTh_{B} in the above-mentioned embodiment may be used as it is as the shifting amount ΔTh, only the vehicle speed gain Gᵥ may be multiplied by the reference shifting amount ΔTh_{B} without using the torque gain G_{T} to find a shifting amount ΔTh, and only the torque gain G_{T} may be multiplied by the reference shifting amount ΔTh_{B} without using the vehicle speed gain Gᵥ to find a shifting amount ΔTh.

In the above-mentioned embodiment, the assist map corresponding to the reference assist characteristics is stored in the assist characteristics storing section 22, and the assist torque target value Ta is read out from the assist map. Instead of this configuration, the assist torque target value Ta corresponding to the steering torque value Th* for retrieval may be determined by a functional operation.

The same is true for the shifting amount computing section 24. The characteristics of the reference shifting amount ΔTh_{B} corresponding to the yaw rate γ may be previously stored in the memory, or the reference shifting amount ΔTh_{B} corresponding to the yaw rate γ may be found by a functional operation. The same is true for computations of the vehicle speed gain Gᵥ corresponding to the vehicle speed V and the torque gain G_{T} corresponding to the steering torque Th.

Although in the above-mentioned embodiment, description has been made using the assist torque target value as a motor driving target value and using the characteristics of the assist torque target value corresponding to the steering torque as assist characteristics, the present invention is not limited to the same. For example, a motor current target value or a motor voltage target value may be taken as a motor driving target value, and the relationship between the steering torque and the motor current target value or the motor voltage target value may be taken as assist characteristics.

Furthermore, although in the above-mentioned embodiment, the yaw rate γ is detected by the yaw rate sensor 7, instead of providing the yaw rate sensor, a steering angle sensor may be provided in order to estimate a yaw rate on the basis of the steering angle detected by the steering angle sensor and the vehicle speed.

## Claims

1. An electric power steering apparatus for performing steering assist by transmitting a driving force produced by an electric motor (M) to a steering mechanism (3), comprising:
an operation amount detecting means (5) for detecting an operation amount of an operation member (1) for steering a motor vehicle;
a reference assist characteristics setting means (22) for setting reference assist characteristics which are reference characteristics of a motor driving target value corresponding to the operation amount detected by the operation amount detecting means (5); and
a motor driving target value setting means (21) for setting a motor driving target value corresponding to the operation amount detected by the operation amount detecting means (5) in accordance with corrected assist characteristics;
a yaw rate detecting means (7) for detecting or estimating a yaw rate of the motor vehicle;
**characterized by** said corrected assist characteristics being obtained by shifting the reference assist characteristics set by the reference assist characteristics setting means (22) along an axis of coordinates of the operation amount; and by
a shifting amount setting means (24) for setting a shifting amount of the corrected assist characteristics with respect to the reference assist characteristics corresponding to the yaw rate detected or estimated by the yaw rate detecting means (7).

2. The electric power steering apparatus according to Claim 1, wherein the shifting amount setting means (24) sets, when forward stroke steering for operating the operation member (1) in a direction away from a steering angle midpoint is done, a shifting amount of the corrected assist characteristics with respect to the reference assist characteristics to zero, while setting, when return stroke steering for operating the operation member (1) toward the steering angle midpoint is done, the shifting amount of the corrected assist characteristics with respect to the reference assist characteristics to a value at which corrected assist characteristics is obtained in which an absolute value of the motor driving target value corresponding to the operation amount detected by the operation amount detecting means (5) is increased.

3. The electric power steering apparatus according to Claim 1 or 2, wherein the operation amount detecting means (24) includes a steering torque detecting means (5) for detecting a steering torque applied to the operation member (1),
the steering torque detected by the steering torque detecting means (5) takes a positive value with respect to a first steering direction which is either one of rightward and leftward directions, while taking a negative value with respect to a second steering direction which is the other direction,
a positive value of the motor driving target value is assigned to a steering torque value taking a positive value, while a negative value of the motor driving target value is assigned to the steering torque value taking a negative value in the reference assist characteristics,
the yaw rate detected by the yaw rate detecting means (7) takes a positive value with respect to a first turning direction of the motor vehicle corresponding to the first steering direction, while taking a negative value with respect to a second turning direction of the motor vehicle corresponding to the second steering direction,
the shifting amount setting means (24) setting, in a case where the steering torque detected by the steering torque detecting means (5) is not less than zero, the shifting amount to zero when the yaw rate detected by the yaw rate detecting means (7) takes a positive value of not less than a first predetermined value, while setting the shifting amount depending on the yaw rate when the yaw rate takes a value of less than the first predetermined value,
and setting, in a case where the steering torque detected by the steering torque detecting means (5) takes a negative value, the shifting amount to zero when the yaw rate detected by the yaw rate detecting means (7) takes a negative value of not more than a second predetermined value, while setting the shifting amount depending on the yaw rate when the yaw rate takes a value exceeding the second predetermined value.

4. The electric power steering apparatus according to any one of Claims 1 through 3, further comprising:
a vehicle speed detecting means (6) for detecting a vehicle speed of the motor vehicle equipped with the electric power steering apparatus; and
a vehicle speed adaptive shifting amount setting means (24, S5, S7) for variably setting the shifting amount of the corrected assist characteristics with respect to the reference assist characteristics depending on the vehicle speed detected by the vehicle speed detecting means (6).

5. The electric power steering apparatus according to any one Claims 1 through 4, further comprising a steering torque detecting means (5) for detecting the steering torque applied to the operation member (1); and
a steering torque adaptive shifting amount setting means (24, S6, S7) for variably setting the shifting amount of the corrected assist characteristics with respect to the reference assist characteristics depending on the steering torque detected by the steering torque detecting means (5).

## Patentansprüche

1. Elektrische Servolenkvorrichtung zum Durchführen einer Lenkunterstützung, indem eine von einem elektrischen Motor (M) erzeugte Antriebskraft auf einen Lenkmechanismus (3), übertragen wird, mit:
Betätigungsbetrag-Erfassungsmitteln (5) zum Erfassen eines Betätigungsbetrages eines Betätigungselementes (1) zum Lenken eines Kraftfahrzeuges;
Referenzhilfscharakteristika-Einstellmitteln (22) zum Einstellen von Referenzhilfscharakteristika, bei denen es sich um Referenzcharakteristika eines Motorantriebssollwertes handelt, und zwar entsprechend dem Betätigungsbetrag, der von den Betätigungsbetrag-Erfassungsmitteln (5) erfasst ist; und
Motorantriebssollwert-Einstellmitteln (21) zum Einstellen eines Motorantriebssollwertes, und zwar entsprechend dem Betätigungsbetrag, der von den Betätigungsbetrag-Erfassungsmitteln (5) erfasst ist, und zwar in Übereinstimmung mit korrigierten Hilfscharakteristika;
Gierraten-Erfassungsmitteln (7) zum Erfassen oder Abschätzen einer Gierrate des Kraftfahrzeugs;
**gekennzeichnet durch** die Tatsache, dass die korrigierten Hilfscharakteristika erhalten werden, indem die Referenzhilfscharakteristika, die von den Referenzhilfscharakteristika-Einstellmitteln (22) eingestellt sind, entlang einer Koordinatenachse des Betätigungsbetrages verschoben werden; und **durch**
Verschiebungsbetrag-Einstellmittel (24) zum Einstellen eines Verschiebungsbetrages der korrigierten Hilfscharakteristika in Bezug auf die Referenzcharakteristika, und zwar entsprechend der Gierrate, die von den Gierraten-Erfassungsmitteln (7) erfasst oder abgeschätzt ist.

2. Elektrische Servolenkvorrichtung nach Anspruch 1, wobei die Verschiebungsbetrag-Einstellmittel (24) einen Verschiebungsbetrag der korrigierten Hilfscharakteristika in Bezug auf die Referenzhilfscharakteristika auf Null einstellen, wenn ein Einlenken zum Betätigen des Betätigungselementes (1) in einer Richtung weg von einem Lenkwinkelmittelpunkt vollzogen wird, wohingegen die Verschiebungsbetrag-Einstellmittel (24) den Verschiebungsbetrag der korrigierten Hilfscharakteristika in Bezug auf die Referenzhilfscharakteristika dann, wenn ein Rücklenken zum Betätigen des Betätigungselementes (1) in Richtung hin zu dem Lenkwinkelmittelpunkt vollzogen wird, auf einen Wert einstellen, bei dem korrigierte Hilfscharakteristika erhalten werden, in denen ein absoluter Wert des Motorantriebssollwertes entsprechend dem Betätigungsbetrag, der von den Betätigungsbetrag-Erfassungsmitteln (5) erfasst ist, erhöht ist.

3. Elektrische Servolenkvorrichtung nach Anspruch 1 oder 2, wobei die Betätigungsbetrag-Erfassungsmittel (24) Lenkdrehmoment-Erfassungsmittel (5) zum Erfassen eines Lenkdrehmomentes aufweisen, das an das Betätigungselement (1) angelegt wird,
wobei das von den Lenkdrehmoment-Erfassungsmitteln (5) erfasste Lenkdrehmoment in Bezug auf eine erste Lenkrichtung, bei der es sich entweder um eine Richtung nach rechts oder eine Richtung nach links handelt, einen positiven Wert annimmt, wohingegen das Lenkdrehmoment in Bezug auf eine zweite Lenkrichtung, bei der es sich um die andere Richtung handelt, einen negativen Wert einnimmt,
wobei in den Referenzhilfscharakteristika ein positiver Wert des Motorantriebssollwertes einem Lenkdrehmomentwert zugewiesen ist, der einen positiven Wert einnimmt, wohingegen ein negativer Wert des Motorantriebssollwertes dem Lenkdrehmomentwert zugewiesen ist, das einen negativen Wert einnimmt,
wobei die von den Gierraten-Erfassungsmitteln (7) erfasste Gierrate einen positiven Wert in Bezug auf eine erste Kurvenrichtung des Kraftfahrzeuges entsprechend der ersten Lenkrichtung einnimmt, wohingegen die Gierrate einen negativen Wert in Bezug auf eine zweite Kurvenrichtung des Kraftfahrzeuges entsprechend der zweiten Lenkrichtung einnimmt,
wobei die Verschiebungsbetrag-Einstellmittel (24) für einen Fall, bei dem das von den Lenkdrehmoment-Erfassungsmitteln (5) erfasste Lenkdrehmoment nicht kleiner ist als Null, den Verschiebungsbetrag auf Null einstellen, wenn die von den Gierraten-Erfassungsmitteln (7) erfasste Gierrate einen positiven Wert von nicht weniger als einem ersten vorbestimmten Wert einnimmt, wohingegen die Verschiebungsbetrag-Einstellmittel (24) den Verschiebungsbetrag in Abhängigkeit von der Gierrate einstellen, wenn die Gierrate einen Wert von weniger als dem ersten vorbestimmten Wert einnimmt, und
wobei die Verschiebungsbetrag-Einstellmittel (24) für einen Fall, bei dem das von den Lenkdrehmoment-Erfassungsmitteln (5) erfasste Lenkdrehmoment einen negativen Wert einnimmt, den Verschiebungsbetrag auf Null einstellen, wenn die von den Gierraten-Erfassungsmitteln (7) erfasste Gierrate einen negativen Wert von nicht mehr als einem zweiten vorbestimmten Wert einnimmt, wohingegen die Verschiebungsbetrag-Einstellmittel (24) den Verschiebungsbetrag in Abhängigkeit von der Gierrate einstellen, wenn die Gierrate einen Wert einnimmt, der den zweiten vorbestimmten Wert überschreitet.

4. Elektrische Servolenkvorrichtung nach einem der Ansprüche 1 bis 3, ferner mit:
Fahrzeuggeschwindigkeits-Erfassungsmitteln (6) zum Erfassen einer Fahrzeuggeschwindigkeit des Kraftfahrzeugs, das mit der elektrischen Servolenkvorrichtung ausgestattet ist; und
fahrzeuggeschwindigkeitsadaptiven Verschiebungsbetrageinstellmitteln (24, S5, S7) zum variablen Einstellen des Verschiebungsbetrages der korrigierten Hilfscharakteristika in Bezug auf die Referenzcharakteristika in Abhängigkeit von der Fahrzeuggeschwindigkeit, die von den Fahrzeuggeschwindigkeits-Erfassungsmitteln (6) erfasst ist.

5. Elektrische Servolenkvorrichtung nach einem der Ansprüche 1 bis 4, ferner mit Lenkdrehmoment-Erfassungsmitteln (5) zum Erfassen des Lenkdrehmomentes, das an das Betätigungselement (1) angelegt wird; und
lenkdrehmomentadaptiven Verschiebungsbetrageinstellmitteln (24, S6, S7) zum variablen Einstellen des Verschiebungsbetrages der korrigierten Hilfscharakteristika in Bezug auf die Referenzhilfscharakteristika in Abhängigkeit von dem Lenkdrehmoment, das von den Lenkdrehmoment-Erfassungsmitteln (5) erfasst ist.

## Revendications

1. Dispositif de direction à assistance électrique pour effectuer une assistance au braquage en transmettant une force d'entraînement produite par un moteur électrique (M) à un mécanisme de direction (3), comprenant :
des moyens de détection de quantité d'actionnement (5) pour détecter une quantité d'actionnement d'un élément d'actionnement (1) pour braquer un véhicule à moteur ;
des moyens de détermination de caractéristiques d'assistance de référence (22) pour déterminer des caractéristiques d'assistance de référence qui sont des caractéristiques de référence d'une valeur cible de commande de moteur correspondant à la quantité d'actionnement détectée par les moyens de détection de quantité d'actionnement (5) ; et
des moyens de détermination de valeur cible de commande de moteur (21) pour déterminer une valeur cible de commande de moteur correspondant à la quantité d'actionnement détectée par les moyens de détection de quantité d'actionnement (5) conformément à des caractéristiques d'assistance corrigées ;
des moyens de détection d'amplitude de mouvement de lacet (7) pour détecter ou estimer une amplitude de mouvement de lacet du véhicule à moteur ;
**caractérisé en ce que** lesdites caractéristiques d'assistance corrigées sont obtenues en décalant les caractéristiques d'assistance de référence déterminées par les moyens de détermination de caractéristiques d'assistance de référence (22) le long d'un axe de coordonnées de la quantité d'actionnement ; et **en ce que**
des moyens de détermination de quantité de décalage (24) pour déterminer une quantité de décalage des caractéristiques d'assistance corrigées par rapport aux caractéristiques d'assistance de référence correspondant à l'amplitude de mouvement de lacet détectée ou estimée par les moyens de détection d'amplitude de mouvement de lacet (7).

2. Dispositif de direction à assistance électrique selon la revendication 1, dans lequel les moyens de détermination de quantité de décalage (24) fixent, lorsqu'un braquage de course vers l'avant pour actionner l'élément d'actionnement (1) dans une direction d'éloignement d'un point milieu d'angle de braquage est effectué, une quantité de décalage des caractéristiques d'assistance corrigées par rapport aux caractéristiques d'assistance de référence à zéro, tandis qu'ils fixent, lorsqu'un braquage de course de retour pour actionner l'élément d'actionnement (1) vers le point milieu d'angle de braquage est effectué, la quantité de décalage des caractéristiques d'assistance corrigées par rapport aux caractéristiques d'assistance de référence à une valeur à laquelle des caractéristiques d'assistance corrigées sont obtenues dans lesquelles une valeur absolue de la valeur cible de commande de moteur correspondant à la quantité d'actionnement détectée par les moyens de détection de quantité d'actionnement (5) est augmentée.

3. Dispositif de direction à assistance électrique selon la revendication 1 ou 2, dans lequel les moyens de détection de quantité d'actionnement (24) comprennent des moyens de détection de couple de braquage (5) pour détecter un couple de braquage appliqué à l'élément d'actionnement (1),
le couple de braquage détecté par les moyens de détection de couple de braquage (5) prend une valeur positive en ce qui concerne une première direction de braquage qui est l'une ou l'autre de directions vers la droite et vers la gauche, tandis qu'il prend une valeur négative en ce qui concerne une deuxième direction de braquage qui est l'autre direction,
une valeur positive de la valeur cible de commande de moteur est attribuée à une valeur de couple de braquage prenant une valeur positive, tandis qu'une valeur négative de la valeur cible de commande de moteur est attribuée à la valeur de couple de braquage prenant une valeur négative dans les caractéristiques d'assistance de référence,
l'amplitude de mouvement de lacet détectée par les moyens de détection d'amplitude de mouvement de lacet (7) prend une valeur positive en ce qui concerne une première direction de virage du véhicule à moteur correspondant à la première direction de braquage, tandis qu'elle prend une valeur négative en ce qui concerne une deuxième direction de virage du véhicule à moteur correspondant à la deuxième direction de braquage,
les moyens de détermination de quantité de décalage (24) fixant, dans un cas où le couple de braquage détecté par les moyens de détection de couple de braquage (5) n'est pas inférieur à zéro, la quantité de décalage à zéro lorsque l'amplitude de mouvement de lacet détectée par les moyens de détection d'amplitude de mouvement de lacet (7) prend une valeur positive qui n'est pas inférieure à une première valeur prédéterminée, tandis qu'ils fixent la quantité de décalage en fonction de l'amplitude de mouvement de lacet lorsque l'amplitude de mouvement de lacet prend une valeur inférieure à la première valeur prédéterminée,
et fixant, dans un cas où le couple de braquage détecté par les moyens de détection de couple de braquage (5) prend une valeur négative, la quantité de décalage à zéro lorsque l'amplitude de mouvement de lacet détectée par les moyens de détection d'amplitude de mouvement de lacet (7) prend une valeur négative qui n'est pas supérieure à une deuxième valeur prédéterminée, tandis qu'ils fixent la quantité de décalage en fonction de l'amplitude de mouvement de lacet lorsque l'amplitude de mouvement de lacet prend une valeur supérieure à la deuxième valeur prédéterminée.

4. Dispositif de direction à assistance électrique selon l'une quelconque des revendications 1 à 3, comprenant en outre :
des moyens de détection de vitesse de véhicule (6) pour détecter une vitesse de véhicule du véhicule à moteur équipé du dispositif de direction à assistance électrique ; et
des moyens de détermination de quantité de décalage adaptative de vitesse de véhicule (24, S5, S7) pour fixer de manière variable la quantité de décalage des caractéristiques d'assistance corrigées par rapport aux caractéristiques d'assistance de référence en fonction de la vitesse de véhicule détectée par les moyens de détection de vitesse de véhicule (6).

5. Dispositif de direction à assistance électrique selon l'une quelconque des revendications 1 à 4, comprenant en outre des moyens de détection de couple de braquage (5) pour détecter le couple de braquage appliqué à l'élément d'actionnement (1) ; et
des moyens de détermination de quantité de décalage adaptative de couple de braquage (24, S6, S7) pour fixer de manière variable la quantité de décalage des caractéristiques d'assistance corrigées par rapport aux caractéristiques d'assistance de référence en fonction du couple de braquage détecté par les moyens de détection de couple de braquage (5).
